# EUROPÄISCHE PATENTSCHRIFT

(11) **EP 3 622 799 B1**
(45) Veröffentlichungstag und Bekanntmachung des Hinweises auf die Patenterteilung: **11.08.2021**
(21) Anmeldenummer: 19178596.3
(22) Anmeldetag: 06.06.2019
(51) Int. Cl.: A01D 41/127

(54) **VERFAHREN ZUM BETRIEB EINER SELBSTFAHRENDEN ERNTEMASCHINE**
METHOD FOR OPERATION OF A SELF-PROPELLED HARVESTER
PROCÉDÉ DE FONCTIONNEMENT D'UNE RÉCOLTEUSE AUTOMOTRICE

(30) Priorität: 17.09.2018 DE 102018122698
(43) Veröffentlichungstag der Anmeldung: 18.03.2020
(73) Patentinhaber: CLAAS Selbstfahrende Erntemaschinen GmbH, 33428 Harsewinkel (DE)
(72) Erfinder: Neitemeier, Dennis, 59510 Lippetal (DE); Barther, Marvin, 33161 Hövelhof (DE); Fischer, Frédéric, 59823 Arnsberg (DE); Kettelhoit, Boris, 33335 Gütersloh (DE)
(74) Vertreter: CLAAS Gruppe

(56) Entgegenhaltungen:
- EP-A1- 2 143 316
- DE-A1-102016 118 244
- US-A1- 2015 262 351
- FORESTI G L ET AL: "A Robust Feautre Tracker for Active Surveillance of Outdoor Scenes", ELCVIA. ELECTRONIC LETTERS ON COMPUTER VISION AND IMAGE ANALYSIS, UNIVERSITAT AUTONOMA DE BARCELONA * CENTRE DE VISIO PER COMPUTADOR, ES, Bd. 1, Nr. 1, 1. Januar 2003 (2003-01-01), Seiten 21-34, XP002712032, ISSN: 1577-5097

## Beschreibung

Die vorliegende Anmeldung betrifft ein Verfahren zum Betrieb einer selbstfahrenden Erntemaschine gemäß dem Oberbegriff von Anspruch 1.

Dieses Verfahren sieht vor, dass mittels eines Schneidwerks der Erntemaschine, die insbesondere von einem Mähdrescher oder einem Feldhäcksler gebildet sein kann, Erntegut geschnitten und sodann mittels eines Schrägförderers in Richtung eines weiteren Arbeitsorgans der Erntemaschine geführt wird. Je nach Art der Erntemaschine kann dieses Arbeitsorgan verschiedene Funktionen aufweisen. Am Beispiel eines Mähdreschers kann das Arbeitsorgan beispielsweise von einem Dreschorgan und/oder von einem Trennorgan gebildet sein. Bei einem Feldhäcksler kann ein Arbeitsorgan beispielsweise von einem Häckselorgan gebildet sein. Das Verfahren sieht vor, dass mittels mindestens einer Kamera sukzessive Bilder aufgenommen werden, wobei ein Erfassungsbereich der Kamera zumindest einen Teil des Schneidwerks und/oder zumindest einen Teil des Schrägförderers beinhaltet. Der "Erfassungsbereich" bezeichnet dabei denjenigen Bereich, den die jeweilige Kamera optisch erfasst. Die aufgenommenen Bilder werden mittels einer Auswerteinheit ausgewertet, wobei zumindest zwei aufeinander folgende Bilder derart verarbeitet werden, dass Veränderungen, die in einem Zeitraum zwischen den Aufnahmen der Bilder aufgetreten sind, ermittelt werden. Auf diese Weise ist es insbesondere möglich, einen Gutfluss des geernteten Ernteguts zu erfassen, wodurch verschiedene Aussagen betreffend den Ernteprozess getätigt werden können. Insbesondere können verschiedene Zustandsparameter erfasst werden, die für die weitere Verarbeitung des Ernteguts bedeutend sein können. Dies kann beispielsweise eine Gutflussgeschwindigkeit des Ernteguts betreffen, in deren Abhängigkeit die nachgeschalteten Arbeitsorgane der Erntemaschine steuerbar sind. Somit ist es insbesondere denkbar, die Arbeitsorgane der Erntemaschine, beispielsweise deren Drehzahlen, in Abhängigkeit des Massenstroms des geernteten Ernteguts zu steuern.

Verfahren der eingangs beschriebenen Art sind im Stand der Technik bereits bekannt. Hierzu wird auf die deutsche Offenlegungsschrift DE 10 2016 118 244 A1 hingewiesen. Diese beschreibt eine selbstfahrende Erntemaschine, die mit einem Bildverarbeitungssystem ausgestattet ist. Letzteres umfasst mindestens eine Kamera, mittels derer das Schneidwerk erfassbar ist. Ferner weist das Bildverarbeitungssystem eine Auswerteinheit auf, mittels derer die aufgenommenen Bilder verarbeitbar sind. Mittels eines Vergleichs zweier Bilder, die insbesondere aufeinander folgen, werden ein optischer Fluss sowie ein korrespondierendes Vektorfeld ermittelt, woraus letztlich Gutflussgeschwindigkeitsverläufe des jeweiligen Gutflusses bestimmt werden können.

Die Problematik im Zusammenhang mit derartigen Verfahren besteht darin, dass ein Vergleich zweier Bilder sowie eine darauf basierte Analyse in der Praxis nur dann verwertbar sind, wenn die Bilder bestimmten Qualitätsanforderungen genügen. Insbesondere müssen die Bilder in gewisser Weise vergleichbar sein, um Veränderungen, die zwischen den Bildern auftreten, dahingehend interpretieren zu können, dass sie den Gutfluss des geernteten Ernteguts abbilden. Mithin sind insbesondere stark verwackelte, unscharfe oder auf sonstige Weise optisch beeinträchtigte Bilder im Rahmen einer solchen Analyse unbrauchbar. Schlimmstenfalls werden Berechnungsergebnisse ermittelt, die die reale Erntesituation unzutreffend abbilden, woraufhin die Steuerung nachgeschalteter Arbeitsorgane anhand falscher Annahmen vorgenommen wird.

Der vorliegenden Erfindung liegt mithin die Aufgabe zugrunde, ein Verfahren bereitzustellen, mittels dessen die Qualität anzufertigender und auszuwertender Bilder verbessert werden kann.

Die zugrunde liegende Aufgabe wird erfindungsgemäß mittels eines Verfahrens mit den Merkmalen des Anspruchs 1 gelöst. Vorteilhafte Ausgestaltungen ergeben sich aus den Unteransprüchen 2 bis 14.

Das erfindungsgemäße Verfahren ist dadurch gekennzeichnet, dass in mindestens einem der auszuwertenden Bilder eine in beiden Bildern enthaltene Referenzregion identifiziert wird. Sodann wird anhand einer Analyse der Referenzregion in beiden Bildern ein statischer Anteil einer Gesamtveränderung ermittelt, die zwischen den Bildern vorliegt. Dieser "statische Anteil" beschreibt eine zwischen den Bildern auftretende Veränderung bzw. Bewegung, die pauschal für sämtliche Bildpunkte gilt. Eine derartige Bewegung zwischen zwei aufeinanderfolgenden Bildern ist in aller Regel auf eine Relativbewegung der jeweiligen Kamera, mittels derer die Bilder aufgenommen wurden, und dem Erfassungsbereich, der mittels der Kamera aufgenommen wurde, zurückzuführen. Die Problematik kann insbesondere darin bestehen, dass eine jeweilige Kamera zwecks optischer Erfassung eines vergleichsweise großen Erfassungsbereichs an einer hoch gelegenen Fahrerkabine der Erntemaschine angeordnet ist, sodass die Kamera einen guten Überblick über das Schneidwerk hat. Die Fahrerkabine ist in aller Regel mittels mindestens einer Dämpfereinheit an dem Tragrahmen der jeweiligen Erntemaschine gelagert, um Vibrationen und Unebenheiten des Untergrundes aus Komfortgründen nicht unmittelbar an den Maschinenführer weiterzuleiten. Das Schneidwerk ist unterdessen typischerweise an dem Schrägförderer aufgehängt, der wiederum an dem Tragrahmen der Erntemaschine gelagert ist. In aller Regel wirkt der Schrägförderer in statischer Hinsicht als Kragarm, an dessen dem Auflager (Tragrahmen) abgewandten Ende das Schneidwerk frei schwingt. Infolge von Unebenheiten des Untergrundes kann es mithin zu erheblichen und insbesondere voneinander unabhängigen Relativbewegungen zwischen der Kamera und Tragrahmen sowie dem Schneidwerk und dem Tragrahmen kommen, da die Kamera und das Schneidwerk auf unterschiedliche Weise an dem Tragrahmen gelagert sind und mithin voneinander abweichende Bewegungen infolge der Unebenheiten ausführen. Der statische Anteil beschreibt nunmehr diejenigen Bewegungen zwischen zwei Bildern, die ausschließlich auf Relativbewegungen zwischen der Kamera und dem Schneidwerk zurückzuführen sind, nicht jedoch Veränderungen beschreiben, die infolge des Betriebs der Erntemaschine aufgetreten sind. Letzteres betrifft insbesondere Bewegungen des geernteten Ernteguts oder eines Arbeitsorgans.

Das erfindungsgemäße Verfahren hat viele Vorteile. Ihm liegt die Überlegung zugrunde, die auszuwertenden Bilder vor der eigentlichen Auswertung gegeneinander auszurichten, sodass der beschriebene statische Anteil eliminiert wird. Eine sich daran anschließender Auswertung wird sodann nur auf diejenigen Veränderungen gestützt, die aufgrund des Gutflusses des geschnittenen Ernteguts auftreten. Die Ausrichtung der auszuwertenden Bilder gegeneinander wird erfindungsgemäß dadurch vorgenommen, dass zumindest in einem der jeweils beteiligten Bilder mindestens eine Referenzregion identifiziert wird. Als solche sind insbesondere Teile der Erntemaschine geeignet, die innerhalb des Erfassungsbereichs liegen und selbst bei Vibrationen der Erntemaschine, die beispielsweise infolge von Unebenheiten des Untergrundes oder infolge von Betriebskräften auftreten, vergleichsweise starr und unbeweglich an dem Tragrahmen angeordnet sind. Unter der Prämisse, dass eine solche Referenzregion keine Relativbewegung zu dem Tragrahmen Bewegung ausführt, das heißt in beiden auszuwertenden Bildern zumindest im Wesentlichen an derselben Stelle angeordnet sein müsste, wird der statische Anteil mittels Analyse der Referenzregionen in beiden Bildern ermittelt.

Als Referenzregion ist insbesondere der Schrägförderer geeignet, der aufgrund seiner unmittelbaren Anordnung an dem Tragrahmen lediglich geringen Schwingungen unterworfen ist. Ebenfalls ist es denkbar, die unmittelbar an dem Tragrahmen angeordnete Aufstiegsleiter oder einen Teil des Tragrahmens selbst, sofern dieser in dem Erfassungsbereich der Kamera liegt, als Referenzregion zu definieren. Die Definition mehrerer und anderer Referenzregionen ist selbstverständlich ebenso denkbar.

Mittels Ermittlung des statischen Anteils ist es sodann möglich, die Bilder gegeneinander auszurichten, insbesondere eines der beiden Bilder um den statischen Anteil zu korrigieren und die auf diese Weise korrigierten Bilder sodann der weiteren Analyse und Auswertung zugrunde zu legen. Die im Weiteren ermittelten Ergebnisse, die insbesondere den Gutfluss des Ernteguts betreffen können, weisen sodann eine größere Zuverlässigkeit gegenüber dem Stand der Technik auf, sodass die Steuerung nachgeschalteter Arbeitsorgane der jeweiligen Erntemaschine auf Basis der auf diese Weise ermittelten Parameter besser möglich ist.

Erfindungsgemäß wird die mindestens eine Referenzregion global definiert. Beispielsweise wird somit vor dem eigentlichen Ernteprozess festgelegt, dass ein Teil des Schrägförderers, der typischerweise innerhalb des Erfassungsbereichs der jeweiligen Kamera liegt, als Referenzregion dienen soll. Im Zuge des Verfahrens wird sodann die so definierte Referenzregion in mindestens einem der auszuwertenden Bilder identifiziert. Dabei ist es grundsätzlich denkbar, die Referenzregion lediglich in einem der beteiligten Bilder zu identifizieren und die Untersuchung des statischen Anteils anhand eines Vergleichs der identifizierten Referenzregion mit einer an derselben Stelle in dem anderen Bild befindlichen Vergleichsregion vorzunehmen. Dem liegt die Überlegung zugrunde, dass die Bewegungen zwischen den beteiligten Bildern in aller Regel derart gering sind, dass in guter Näherung davon ausgegangen werden darf, dass die in dem einen Bild identifizierte Referenzregion als solche sich in dem jeweils anderen Bild grundsätzlich in derselben Region des Bildes befindet.

Die Bestimmung des statischen Anteils als solchem kann erfindungsgemäß mittels eines Vergleichs von Bildpunkten erfolgen, wobei in dem einen Bild innerhalb der Referenzregion befindliche Bildpunkte in dem anderen Bild in der Referenzregion ermittelt werden. Nach Ermittlung übereinstimmender Bildpunkte in den beiden Bildern wird ermittelt, inwieweit diese einander zugeordneten Bildpunkte in den Bildern relativ zueinander bewegt sind, das heißt insbesondere in wieweit sich die Koordinaten der einander zugeordneten Bildpunkte unterscheiden. Aus der Differenz der Koordinaten lässt sich sodann ein Vektor ermitteln, um den der Referenzregion zugeordnete Bildpunkte beider Bilder zwischen den Bildern verschoben sind. Für die Ermittlung eines solchen (Korrektur)Vektors kann es vorteilhaft sein, eine Vielzahl einzelner Vektoren betreffend einzelne Bildpunkte zu ermitteln und sodann für einen letztlichen (Ergebnis-)Vektor, der sodann für die Beschreibung des statischen Anteils im Weiteren herangezogen wird, das Ergebnis einer Mittelung zwischen den einzelnen Vektoren vorzunehmen.

Unter Verwendung der vorgeschriebenen Vorgehensweise mittels der Ermittlung mindestens eines Vektors ist es weiterhin von Vorteil, wenn im Anschluss sämtliche Bildpunkte eines der beteiligten Bilder um diesen Vektor verschoben werden. Im Ergebnis sind die Bildpunkte der beiden Bilder, die jeweils der Referenzregion zugeordnet sind, zumindest im Wesentlichen, vorzugsweise vollständig, deckungsgleich. Folglich sind die beiden Bilder gegeneinander ausgerichtet, wodurch der statische Anteil eliminiert ist. In einer sich anschließenden Analyse der beiden Bilder festgestellte Veränderungen sind sodann auf tatsächliche Bewegungen insbesondere von Erntegut zurückzuführen. Auf Basis dieser Veränderungen ermittelte Ergebnisse betreffend den Gutfluss und dergleichen eigenen sich besonders gut für die automatische Steuerung von Arbeitsorganen der Erntemaschine.

Erfindungsgemäß ist es von Vorteil, wenn Veränderungen einzelner Elemente ermittelt werden, die in einem zwischen den Bildern liegenden Zeitraum aufgetreten sind, wobei der statische Anteil der Gesamtveränderung unberücksichtigt bleibt, das heißt keinen Einfluss auf die Ermittlung der Veränderungen hat. Dabei werden die Veränderungen erst nach der Korrektur des statischen Anteils vorgenommen. Die Elemente, deren Veränderung bzw. Bewegung zwischen den Bildern bestimmt wird, können insbesondere von Stücken des Ernteguts und/oder von zumindest Teilen von Arbeitsorganen der Erntemaschine gebildet sein.

Mittels der Analyse der jeweiligen Bilder können mittels der Auswerteinheit insbesondere Zustandsparameter des Ernteguts und/oder von mindestens einem Arbeitsorgan der Erntemaschine ermittelt werden. Insbesondere ist es denkbar, eine Gutflussgeschwindigkeit des Ernteguts zu ermitteln. Vorteilhafterweise werden derartige Zustandsparameter automatisch weiterverarbeitet, wobei mindestens ein Betriebsparameter mindestens eines Arbeitsorgans der Erntemaschine automatisch verändert wird. Somit ist es beispielsweise denkbar, dass bei Feststellung einer erhöhten Gutflussgeschwindigkeit im Bereich des Schneidwerks die Drehzahl der Dreschtrommel eines Mähdreschers bzw. des Häckselorgans eines Feldhäckslers erhöht wird.

In einer besonders vorteilhaften Ausgestaltung des erfindungsgemäßen Verfahrens wird mittels der mindestens einen Kamera ein von der Erntemaschine abgewandter, in Fahrtrichtung der Erntemaschine betrachtet vor dem Schneidwerk befindlicher Vorbereich des Schneidwerks und/oder ein in Fahrtrichtung der Erntemaschine betrachtet hinter dem Schneidwerk befindlicher Rückbereich des Schneidwerks erfasst. Auf diese Weise ist es möglich, über den reinen Gutfluss hinausgehende Zustandsparameter zu ermitteln, wobei die Beobachtung des Vorbereichs beispielsweise einen Aufschluss über die Dichte des Ernteguts geben kann, während die Beobachtung des Rückbereichs beispielsweise Informationen betreffend die Schneidhöhe des Schneidwerks bezogen auf die einzelnen Pflanzen des Ernteguts liefern kann. Derartige Informationen können sodann verarbeitet werden, um Betriebsparameter von Arbeitsorganen der jeweiligen Erntemaschine automatisch zu verändern, ohne dass der Eingriff des Maschinenführers erforderlich ist. Beispielsweise kann automatisch das Schneidwerk angehoben oder abgesenkt, eine Drehzahl einer Förderwalze erhöht oder gesenkt, die Drehzahl eines Häckselorgans oder eines Dreschorgans erhöht oder gesenkt werden und dergleichen mehr.

Insgesamt ist es mithin vorteilhaft, wenn der Erfassungsbereich den beschriebenen Vorbereich, den beschriebenen Rückbereich, einen Teil des Schneidwerks sowie einen Teil des Schrägförderers umfasst. Eine derartige Ausgestaltung des Erfassungsbereichs ermöglicht die Definition einer Referenzregion, die vergleichsweise starr ist (Schrägförderer) sowie die Erfassung von Bereichen, die zur Ermittlung von Daten wesentlich sind, die wiederum für die automatische Steuerung der Arbeitsorgane der jeweiligen Erntemaschine maßgeblich sind.

Vorteilhafterweise wird die jeweilige Erntemaschine mit einer Mehrzahl von Kameras ausgestattet, mittels derer die gleichzeitige Aufnahme von Bildern möglich ist. Insbesondere ist es denkbar, dass verschiedene Kameras unterschiedliche Erfassungsbereiche aufweisen, wobei beispielsweise die Beobachtung einer linken Seite und einer rechten Seite des jeweiligen Schneidwerks möglich ist. Auf diese Weise können Unterschiede betreffend den oder die Zustandsparameter des Ernteprozesses, die über eine Breite des jeweiligen Schneidwerks hinweg auftreten können, in der weiteren Auswertung der Bilder berücksichtigt werden. Ebenso ist es denkbar, dass Erfassungsbereiche verschiedener Kameras sich zumindest teilweise überschneiden, wobei diese Erfassungsbereiche vorzugsweise gleiche Teile der Erntemaschine erfassen. Insbesondere können verschiedene Erfassungsbereiche jeweils einen Mittelbereich des Schneidwerks und/oder einen Teil des Schrägförderers beinhalten.

Die Bilder als solche werden vorteilhafterweise mit einer Frequenz von mindestens 10 Hz, vorzugsweise mindestens 20 Hz, weiter vorzugsweise mindestens 30 Hz, aufgenommen. Je nach Anwendung kann auch eine deutlich höhere Frequenz vorteilhaft sein, beispielsweise im Bereich 60 Hz.

Weiterhin kann es vorteilhaft sein, den Erfassungsbereich mittels der mindestens einen Kamera durch eine Frontscheibe der Erntemaschine hindurch zu erfassen, wobei die Kamera in einem Innenraum einer Fahrerkabine der Erntemaschine angeordnet ist. Bei dieser Anordnung ist die Kamera vor äußeren Störeinflüssen geschützt, die außerhalb der Fahrerkabine auftreten können. Letzteres betrifft insbesondere Staub und Schmutz, der im Zuge des Ernteprozesses anfällt und eine Linse der Kamera verschmutzen kann. Um einen dauerhaft freien Blick durch die Frontscheibe der Fahrerkabine zu gewährleisten, kann es weiterhin vorteilhaft sein, die Frontscheibe zumindest in einem Wirkungsbereich der Kamera fortwährend mittels mindestens einer Reinigungseinrichtung, die insbesondere von einem Scheibenwischer gebildet sein kann, zu reinigen. Auf diese Weise sind die mittels der jeweiligen Kamera aufgenommenen Bilder zumindest im Wesentlichen frei von Störeinflüssen, die unabhängig von dem statischen Anteil einer Gesamtveränderung zwischen den auszuwertenden Bildern zu einer Verfälschung eines Auswertungsergebnisses führen können.

Das erfindungsgemäße Verfahren ist nachstehend anhand eines Ausführungsbeispiels, das in den Figuren dargestellt ist, näher erläutert. Es zeigt:
- Fig. 1:: Einen Längsschnitt durch eine Erntemaschine,
- Fig. 2:: Eine Vorderansicht der Erntemaschine gemäß Figur 1 und
- Fig. 3:: Zwei auszuwertende, aufeinander folgende Bilder, die mittels einer Kamera der Erntemaschine gemäß Figur 1 aufgenommen wurden.

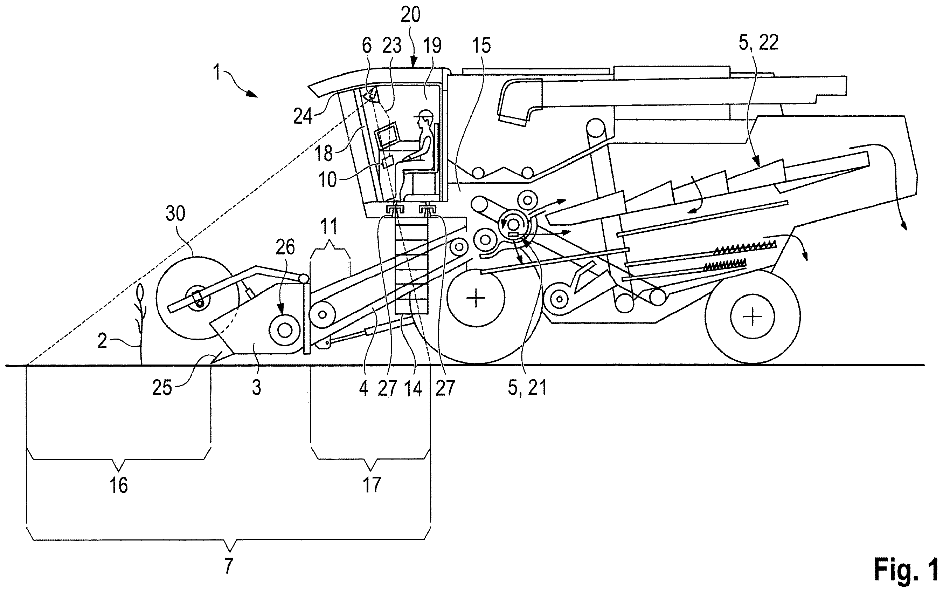

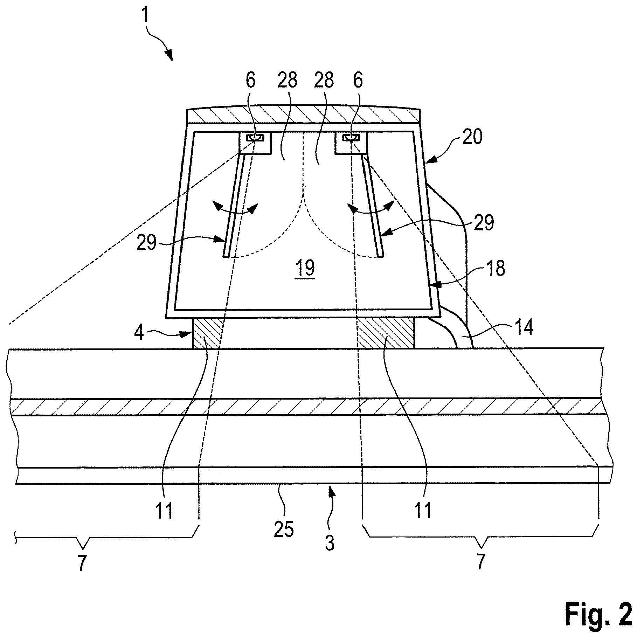

Ein Ausführungsbeispiel, das in den **Figuren 1 bis 3** gezeigt ist, umfasst eine Erntemaschine **1,** die hiervon einem Mähdrescher gebildet ist. Die Erntemaschine **1** weist ein Schneidwerk **3,** einen Schrägförderer **4** sowie weitere Arbeitsorgane **5** auf. Beispielhaft seien hier ein Dreschorgan **21** sowie ein Trennorgan **22** genannt. An einem vorderen Ende des Schneidwerks **3** umfasst selbiges einen Mähbalken **25,** mittels dessen Erntegut **2** schneidbar ist. Das Erntegut **2** wird im Zuge seines Abschneidens mittels einer Haspel **30** geordnet auf einem in den Figuren nicht dargestellten Schneidtisch des Schneidwerks **3** abgelegt. Da eine Breite des Schneidwerks **3** eine Breite des Schrägförderers **4** deutlich übersteigt, ist es sodann zunächst erforderlich, das Erntegut **2** mittels einer parallel zu dem Mähbalken **25** orientierten Förderwalze **26** in eine Richtung quer zu einer Längsachse der Erntemaschine **1** zu befördern und in einem Einflussbereich des Schrägförderers **4** zusammenzuführen. Mittels des Schrägförderers **4** wird das Erntegut **2** sodann den weiteren Arbeitsorganen **5** der Erntemaschine **1** zugeführt.

An einem vorderen Ende sowie in einer erhöhten Position oberhalb des Schneidwerks **3** umfasst die Erntemaschine **1** eine Fahrerkabine **20,** innerhalb derer ein Maschinenführer der Erntemaschine **1** sich während eines jeweiligen Ernteprozesses aufhält und von der aus er die Erntemaschine **1** steuert. Die Fahrerkabine **20** ist mittels Dämpfereinheiten **27** an dem Tragrahmen **15** gelagert, sodass Vibrationen des Tragrahmens 15 nicht ungedämpft an die Fahrerkabine **20** sowie den sich darin aufhaltenden Maschinenführer weitergegeben werden. In einem oberen Endbereich eines Innenraums **19** sowie einem Vorderende **24** der Fahrerkabine **20** sind seitlich versetzt in dem gezeigten Beispiel zwei Kameras **6** angeordnet. Die Kameras **6** sind unmittelbar hinter einer Frontscheibe **18** der Fahrerkabine **20** angeordnet, sodass sie vor äußeren Umwelteinflüssen, die außerhalb der Fahrerkabine **20** vorherrschen, räumlich getrennt sind. Insbesondere sind die Kameras **6** derart ausgerichtet, dass sie ihren jeweiligen Erfassungsbereich **7** durch einen Wirkungsbereich **28** hindurch beobachten, innerhalb dessen eine von einem Scheibenwischer gebildete Reinigungseinrichtung **29** wirkt. Auf diese Weise ist sichergestellt, dass die Kameras **6** fortwährend einen freien Blick auf den jeweiligen Erfassungsbereich **7** haben, der zumindest im Wesentlichen frei von Verschmutzungen, beispielsweise Staub oder Dreck, ist.

Die beiden Kameras **6** sind derart ausgerichtet, dass ihr jeweiliger Erfassungsbereich **7,** den die Kameras **6** optisch erfassen, jeweils einen Teil des Schneidwerks **3** sowie einen Teil des Schrägförderers **4** beinhalten. Weiterhin sind die Kameras **6** derart beschaffen und ausgerichtet, dass sie jeweils einen in Fahrtrichtung der Erntemaschine **1** betrachtet vor dem Schneidwerk **3** befindlichen Vorbereich **16** sowie einen in Fahrtrichtung der Erntemaschine **1** betrachtet hinter dem Schneidwerk **3** befindlichen Rückbereich **17** erfassen. Überdies sind die Kameras **6** jeweils auf einen seitlichen Bereich des Schneidwerks **3** gerichtet, sodass mittels der einen Kamera **6** ein rechter Bereich des Schneidwerks **3** und mittels der anderen Kamera **6** ein linker Bereich des Schneidwerks **3** erfassbar sind. Auf diese Weise sind die Kameras **6** dazu geeignet, Bilder **8, 9** aufzunehmen, die jeweils den Vorbereich **16,** den Rückbereich **17** sowie einen Teil des Schneidwerks **3** und des Schrägförderers **4** beinhalten. Alternativ oder zusätzlich zu der gezeigten Ausführungsform ist es ebenso denkbar, dass die Erfassungsbereiche **7** einer Mehrzahl von Kameras **6** sind zumindest teilweise überschneiden, insbesondere in einem Mittelbereich des Schneidwerks **3.** Idealerweise beinhalten die einander überschneidenden Erfassungsbereiche **7** einen gleichen Teil des Schrägförderers **4,** der sich besonders gut zur Definition einer Referenzregion **11** eignet.

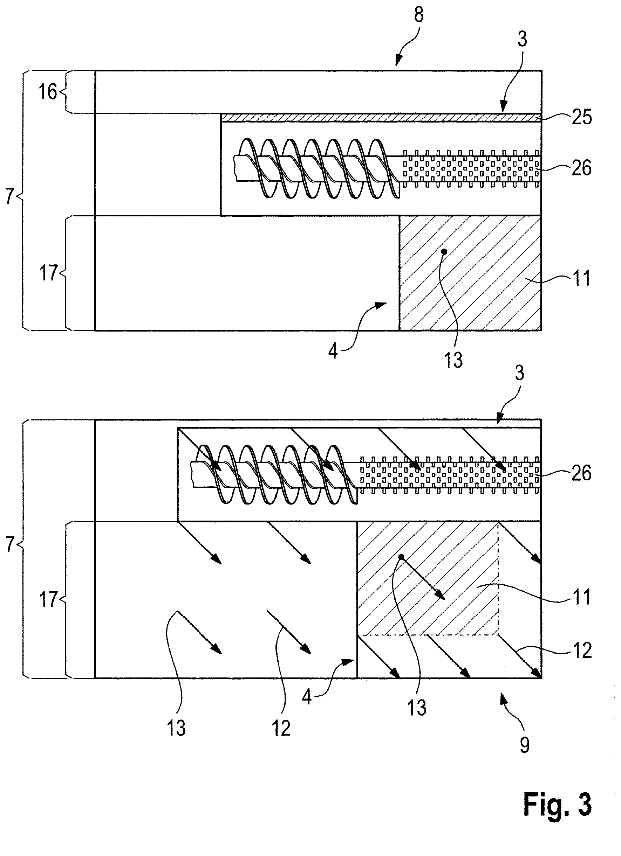

Zwei aufeinander folgend aufgenommene Bilder **8, 9** einer Kamera **6** sind skizzenhaft in **Figur 3** einander gegenübergestellt. Ein derartiges Bildpaar ist dazu geeignet, mittels einer Auswerteeinheit **10,** die in dem gezeigten Beispiel in der Fahrerkabine **20** angeordnet ist, ausgewertet zu werden. Hierzu sind die Kameras **6** jeweils mittels einer Datenverbindung **23** mit der Auswerteinheit **10** verbunden, mittels derer die Bilder **8, 9** an die Auswerteinheit **10** geleitet werden. Die Auswertung eines derartigen Bildpaares dient insbesondere dazu, Zustandsparameter betreffend das Erntegut und/oder den Ernteprozess zu ermittelt und in Abhängigkeit der Zustandsparameter die Arbeitsorgane **5** der Erntemaschine **1** automatisch zu steuern.

Die Auswertung der Bilder **8, 9** eines Bildpaares berücksichtigt insbesondere Veränderungen, die in einem Zeitraum zwischen den Aufnahmen der Bilder **8, 9** eingetreten sind. Insbesondere dient die Auswertung dazu, Bewegungen des Ernteguts in oder an dem Schneidwerk **3** und/oder in oder an dem Schrägförderer **4** zu erfassen. Auf diese Weise wird ein Gutfluss des geschnittenen Ernteguts ermittelt, wobei insbesondere Zustandsparameter wie eine Gutflussgeschwindigkeit für die weitere Verarbeitung und Steuerung der Arbeitsorgane **5** von Interesse sind. Da die Fahrerkabine **20** mittels der Dämpfereinheiten **27** gedämpft an dem Tragrahmen **15** gelagert ist und zudem das Schneidwerk **3** in dem gezeigten Beispiel ausschließlich mittels des Schrägförderers **4** an dem Tragrahmen **15** gelagert ist, kommt es in der Praxis infolge von Unebenheiten eines Untergrundes, auf dem sich die Erntemaschine **1** bewegt, sowie infolge von durch Betriebskräfte ausgelöste Vibrationen zu Relativbewegungen zwischen den Kameras **6** und dem Schneidwerk **3.** Diese Relativbewegungen schlagen sich sodann in Form von Veränderungen in den Bildern **8, 9** des jeweiligen Bildpaares nieder, die Teil einer Gesamtveränderung sind. Diese statischen Veränderungen bzw. diese "statischen Anteile", die im Zuge einer Auswertung der Bilder **8, 9** mittels der Auswerteinheit **10** ermittelt werden würden, sind nicht auf bestimmte Zustandsparameter des Ernteprozesses zurückzuführen, sondern einzig und allein auf die genannten Relativbewegungen. Entsprechend würden Auswertungsergebnisse, denen die Bilder **8, 9** unverändert zugrunde liegen, durchweg einem "statischen Fehler" unterliegen, der im Ergebnis zu einer ungeeigneten, nicht den tatsächlichen Zustandsparametern des Ernteprozesses gerecht werdenden Steuerung der Arbeitsorgane **5** der Erntemaschine **1** führen könnte.

Um einen solchen statischen Anteil einer Gesamtveränderung zwischen den beiden Bildern **8, 9** zu korrigieren, wird erfindungsgemäß in dem vorliegenden Beispiel in dem ersten Bild **8** des Bildpaares eine Referenzregion **11** identifiziert. Als Referenzregion **11** wurde hier im Vorfeld der Auswertung global der Schrägförderer **4** bestimmt, der aufgrund seiner unmittelbaren Lagerung an dem Tragrahmen **15** vergleichsweise geringen Schwingungen infolge von Unebenheiten des Untergrundes sowie sonstiger Vibrationen während des Betriebs der Erntemaschine **1** unterlegen ist. In dem Bild **8** wird nunmehr der Schrägförderer **4** identifiziert, der sodann die Referenzregion **11** bildet. Im Weiteren wird mindestens ein Bildpunkt **13,** der in dem Bild **8** innerhalb der Referenzregion **11** liegt, in dem anderen Bild **9** des Bildpaares unter Verwendung entsprechender Analysealgorithmen identifiziert. Mittels eines Vergleichs der Koordinaten der Bildpunkte **13** in den Bildern **8, 9** ergibt sich eine Differenz, die auf eine Relativbewegung der Kamera **6** zu dem Schneidwerk **3** zurückzuführen ist. Diese Differenz wird typischerweise für eine Vielzahl von Bildpunkten **13** ermittelt, die sich innerhalb der Referenzregion **11** befinden.

Anhand der Differenz lässt sich sodann ein Vektor **12** ermitteln, um den das zweite Bild **9** bzw. sämtliche Bildpunkte des zweiten Bildes **9** verschoben werden. Im Anschluss daran sind sämtliche Bildpunkte **13** des Bereichs des zweiten Bildes **9,** der mit der Referenzregion **11** des ersten Bildes **8** korrespondiert, hinsichtlich ihrer Bildkoordinaten zumindest im Wesentlichen in Überdeckung mit den zugordneten Bildpunkten **13** des ersten Bildes **8.** Mit anderen Worten weisen die Bildpunkte **13** der Referenzregion **11** sodann in beiden Bildern **8, 9** zumindest im Wesentlichen dieselben Koordinaten auf. Der zu diesem Ergebnis führende Vektor **12** wird auf sämtliche Bildpunkte des zweiten Bildes **9** angewendet, wodurch der statische Anteil der Gesamtveränderung zwischen den Bildern **8, 9** insgesamt korrigiert wird. Eine vorstehend beschriebene Auswertung der Bilder **8, 9** mittels der Auswerteinheit **10** findet erst im Anschluss an diese Korrektur statt. Veränderungen, die schließlich zwischen den (korrigierten) Bildern **8, 9** ermittelt werden, sind sodann unabhängig von dem statischen Anteil und mithin auf tatsächliche Bewegungen, insbesondere des Ernteguts, zurückzuführen.

In dem gezeigten Beispiel ist als Referenzregion **11** ein Teil des Schrägförderers **4** ausgewählt. Grundsätzlich ist es gleichwohl denkbar, auch andere Teile der Erntemaschine **1** als Referenzregion **11** zu bestimmen, die vorteilhafterweise einer geringen Relativbewegung bezogen auf den Tragrahmen **15** unterliegen. Beispielsweise ist es denkbar, zumindest einen Teil einer Aufstiegsleiter **14,** die unmittelbar an den Tragrahmen **15** angeordnet ist, oder einen Teil des Tragrahmens **15** selbst als Referenzregion **11** auszuwählen. Grundsätzlich ist es ferner denkbar, eine Mehrzahl von Referenzregionen **11** auszuwählen und in mindestens einem Bild **8, 9** eines jeweiligen Bildpaares zu identifizieren. Die Ermittlung eines jeweiligen Vektors **12,** um den die Bildpunkte **13** eines der Bilder **8, 9** korrigiert werden, kann dabei insbesondere das Ergebnis einer Mittelung von Differenzen betreffend verschiedene Bildpunkte **13** in den Bildern **8, 9** sein.

### Bezugszeichenliste

- 1: Erntemaschine
- 2: Erntegut
- 3: Schneidwerk
- 4: Schrägförderer
- 5: Arbeitsorgan
- 6: Kamera
- 7: Erfassungsbereich
- 8: Bild
- 9: Bild
- 10: Auswerteinheit
- 11: Referenzregion
- 12: Vektor
- 13: Bildpunkt
- 14: Aufstiegsleiter
- 15: Tragrahmen
- 16: Vorbereich
- 17: Rückbereich
- 18: Frontscheibe
- 19: Innenraum
- 20: Fahrerkabine
- 21: Dreschorgan
- 22: Trennorgan
- 23: Datenverbindung
- 24: Vorderende
- 25: Mähbalken
- 26: Förderwalze
- 27: Dämpfereinheit
- 28: Wirkungsbereich
- 29: Reinigungseinrichtung
- 30: Haspel

## Patentansprüche

1. Verfahren zum Betrieb einer selbstfahrenden Erntemaschine (1), insbesondere eines Mähdreschers oder eines Feldhäckslers, umfassend die folgenden Verfahrensschritte:
a) Erntegut (2) wird mittels eines Schneidwerks (3) geschnitten und ausgehend von dem Schneidwerk (3) mittels eines Schrägförderers (4) in Richtung eines Arbeitsorgans (5) geführt, mittels dessen das Erntegut (2) bearbeitbar ist;
b) mittels mindestens einer Kamera (6) werden innerhalb eines zumindest einen Teil des Schneidwerks (3) und/oder des Schrägförderers (4) beinhaltenden Erfassungsbereichs (7), den die Kamera (6) optisch erfasst, sukzessive Bilder (8, 9) aufgenommen;
c) die Bilder (8, 9) werden mittels mindestens einer Auswerteinheit (10) ausgewertet, wobei zumindest zwei aufeinander folgende Bilder (8, 9) derart verarbeitet werden, dass Veränderungen, die in einem Zeitraum zwischen den Aufnahmen der Bilder (8, 9) aufgetreten sind, ermittelt werden;
**gekennzeichnet durch** die folgenden Verfahrensschritte:
d) mindestens eine Referenzregion (11) wird global definiert, die in einem Vergleich der auszuwertenden Bilder (8, 9) vor der Ermittlung des statischen Anteils in zumindest einem der Bilder (8, 9) individuell identifiziert wird;
e) in dem ersten Bild (8) der auszuwertenden Bilder (8, 9) wird die global definierte Referenzregion (11) identifiziert;
f) ein in der Referenzregion (11) liegender Bildpunkt (13) des ersten Bildes (8) wird in dem weiteren Bild (9) unter Verwendung entsprechender Analysealgorithmen identifiziert; und
g) anhand einer Analyse der Referenzregion (11) in beiden Bildern (8, 9) wird ein statischer Anteil einer zwischen den Bildern (8, 9) vorliegenden Gesamtveränderung ermittelt.

2. Verfahren nach Anspruch 1, wobei der statische Anteil in Form eines Vektors (12) ermittelt wird, um den der Referenzregion (11) zugeordnete Bildpunkte (13) beider Bilder (8, 9) zwischen den Bildern (8, 9) verschoben sind.

3. Verfahren nach Anspruch 2, wobei sämtliche Bildpunkte (13) eines der Bilder (8, 9) derart um den Vektor (12) verschoben werden, dass der Referenzregion (11) zugeordnete Bildpunkte (13) der beiden Bilder (8, 9) zumindest im Wesentlichen, vorzugsweise vollständig, deckungsgleich sind.

4. Verfahren nach einem der Ansprüche 1 bis 3, wobei in dem zwischen den Aufnahmen der Bilder (8, 9) liegenden Zeitraum aufgetretenen Veränderungen einzelner, in den Bildern (8, 9) identifizierter Elemente, insbesondere von Stücken des Ernteguts (2) und/oder von Arbeitsorganen (5) der Erntemaschine (1), bestimmt werden, wobei der statische Anteil der Gesamtveränderung unberücksichtigt bleibt.

5. Verfahren nach einem der Ansprüche 1 bis 4, wobei mittels der Auswerteinheit (10) Zustandsparameter des Ernteguts und/oder von Arbeitsorganen (5) der Erntemaschine (1) ermittelt werden.

6. Verfahren nach Anspruch 5, wobei mindestens ein Geschwindigkeitszustand betreffend eine Flussgeschwindigkeit des geschnittenen Ernteguts im Bereich des Schneidwerks (3) und/oder des Schrägförderers (4) ermittelt wird.

7. Verfahren nach Anspruch 5 oder 6, wobei in Abhängigkeit der ermittelten Zustandsparameter mindestens ein Betriebsparameter mindestens eines Arbeitsorgans (5) der Erntemaschine (1) automatisch verändert wird.

8. Verfahren nach einem der Ansprüche 1 bis 7, wobei als Referenzregion (11) zumindest ein Bereich des Schrägförderers (4) und/oder zumindest ein Teil einer Aufstiegsleiter (14) und/oder zumindest ein Teil eines Tragrahmens (15) der Erntemaschine (1) definiert wird.

9. Verfahren nach einem der Ansprüche 1 bis 8, wobei mittels der Kamera (6) mindestens ein von der Erntemaschine (1) abgewandter, in Fahrtrichtung der Erntemaschine (1) vor dem Schneidwerk (3) befindlicher Vorbereich (16) des Schneidwerks (3) und/oder ein in Fahrtrichtung der Erntemaschine (1) betrachtet hinter dem Schneidwerk (3) befindlicher Rückbereich (17) des Schneidwerks (3) erfasst wird.

10. Verfahren nach Anspruch 9, wobei der Erfassungsbereich (7) den Vorbereich (16), den Rückbereich (17), einen Teil des Schneidwerks (3) sowie einen Teil des Schrägförderers (4) umfasst.

11. Verfahren nach einem der Ansprüche 1 bis 10, wobei eine Mehrzahl von Bildern (8, 9) gleichzeitig aufgenommen wird, vorzugsweise mittels einer der Anzahl der Bilder (8, 9) entsprechenden Anzahl von Kameras (6).

12. Verfahren nach Anspruch 11, wobei Erfassungsbereiche (7) einer Mehrzahl von Kameras (6) einander zumindest teilweise überschneiden, vorzugsweise in einem Mittelbereich des Schneidwerks (3).

13. Verfahren nach einem der Ansprüche 1 bis 12, wobei die Bilder (8, 9) mit einer Frequenz von mindestens 10 Hz, vorzugsweise mindestens 20 Hz, weiter vorzugsweise mindestens 30 Hz, aufgenommen werden.

14. Verfahren nach einem der Ansprüche 1 bis 13, wobei der Erfassungsbereich (7) durch eine Frontscheibe (18) der Erntemaschine (1) hindurch erfasst wird, wobei die Kamera (6) in einem Innenraum (19) einer Fahrerkabine (20) der Erntemaschine (1) angeordnet ist.

## Claims

1. A method of operating a self-propelled harvester (1), in particular a combine harvester or a forage harvester, including the following method steps:
a) crop material (2) is cut by means of a cutting header (3) and from the cutting header (3) fed by means of an inclined conveyor (4) in the direction of a working member (5), by means of which the crop material (2) can be processed,
b) by means of at least one camera (6) successive images (8, 9) are recorded within a detection region (7) which includes a part of the cutting header (3) and/or the inclined conveyor (4) and which the camera (6) optically detects,
c) the images (8, 9) are evaluated by means of at least one evaluation unit (10), wherein at least two successive images (8, 9) are processed in such a way that changes which have occurred in a period of time between the recordings of the images (8, 9) are determined, **characterised by** the following method steps:
d) at least one reference region (11) is globally defined, which is individually identified in a comparison of the images (8, 9) to be evaluated prior to determination of the static component in at least one of the images (8, 9),
e) the globally defined reference region (11) is identified in the first image (8) of the images (8, 9) to be evaluated,
f) an image point (13) of the first image (8), that is in the reference region (11), is identified in the further image (9) using suitable analysis algorithms, and
g) a static component of an overall change occurring between the images (8, 9) is determined on the basis of an analysis of the reference region (11) in both images (8, 9).

2. A method according to claim 1 wherein the static component is determined in the form of a vector (12), by which image points (13) of both images (8, 9), that are associated with the reference region (11), are shifted between the images (8, 9).

3. A method according to claim 2 wherein all image points (13) of one of the images (8, 9) are shifted by the vector (12) in such a way that image points (13) of the two images (8, 9), that are associated with the reference region (11), are at least substantially and preferably completely congruent.

4. A method according to one of claims 1 to 3 wherein changes which occurred in the period of time between the recordings of the images (8, 9), of individual elements identified in the images (8, 9), in particular pieces of the crop material (2) and/or working members (5) of the harvester (1) are determined, wherein the static component of the overall change remains disregarded.

5. A method according to one of claims 1 to 4 wherein state parameters of the crop material and/or of working members (5) of the harvester (1) are determined by means of the evaluation unit (10).

6. A method according to claim 5 wherein at least one speed state concerning a flow speed of the cut crop material is determined in the region of the cutting header (3) and/or the inclined conveyor (4).

7. A method according to claim 5 or claim 6 wherein at least one operating parameter of at least one working member (5) of the harvester (1) is automatically changed in dependence on the determined state parameter.

8. A method according to one of claims 1 to 7 wherein at least one region of the inclined conveyor (4) and/or at least a part of a climbing ladder (14) and/or at least a part of a support frame (15) of the harvester (1) is defined as the reference region (11).

9. A method according to one of claims 1 to 8 wherein at least one front region (16) of the cutting header (3), that faces away from the harvester (1) and is in front of the cutting header (3) in the direction of travel of the harvester (1) and/or a rear region (17) of the cutting header (3), that is behind the cutting header (3) considered in the direction of travel of the harvester (1) is detected by means of the camera (6).

10. A method according to claim 9 wherein the detection region (7) includes the front region (16), the rear region (17), a part of the cutting header (3) and a part of the inclined conveyor (4).

11. A method according to one of claims 1 to 10 wherein a multiplicity of images (8, 9) is recorded simultaneously, preferably by means of a number of cameras (6) corresponding to the numer of images (8, 9).

12. A method according to claim 11 wherein detection regions (7) of a multiplicity of cameras (6) at least partially overlap each other, preferably in a central region of the cutting header (3).

13. A method according to one of claims 1 to 12 wherein the images (8, 9) are recorded at a frequency of at least 10 Hz, preferably at least 20 Hz, further preferably at least 30 Hz.

14. A method according to one of claims 1 to 13 wherein the detection region (7) is detected through a front window (18) of the harvester (1), wherein the camera (6) is arranged in an interior (19) of a driver cab (20) of the harvester (1).

## Revendications

1. Procédé de fonctionnement d'une machine de récolte automotrice (1), en particulier d'une moissonneuse-batteuse ou d'une ensileuse, incluant les étapes de procédé suivantes :
a) le produit récolté (2) est coupé au moyen d'un tablier de coupe (3) et, à partir du tablier de coupe (3), guidé au moyen d'un convoyeur incliné (4) en direction d'un organe de travail (5) au moyen duquel le produit récolté (2) peut être traité ;
b) au moyen d'au moins une caméra (6), des images successives (8, 9) sont prises à l'intérieur d'une zone de couverture (7) qui englobe au moins une partie du tablier de coupe (3) et/ou du convoyeur incliné (4) et que la caméra (6) couvre optiquement ;
c) les images (8, 9) sont analysées au moyen d'au moins une unité d'analyse (10), au moins deux images se suivant l'une l'autre (8, 9) étant traitées de façon que des modifications survenues dans un laps de temps entre les prises des images (8, 9) soient détectées ;
**caractérisé par** les étapes de procédé suivantes :
d) au moins une région de référence (11) est définie globalement, laquelle est identifiée individuellement dans une comparaison des images à analyser (8, 9) avant la détermination de la fraction statique dans au moins une des images (8, 9) ;
e) dans la première image (8) des images à analyser (8, 9), la région de référence globalement définie (11) est identifiée ;
f) un point d'image (13) de la première image (8) situé dans la région de référence (11) est identifié dans l'autre image (9) en utilisant des algorithmes d'analyse correspondants ; et
g) à l'aide d'une analyse de la région de référence (11) dans les deux images (8, 9), une fraction statique d'une modification générale existant entre les images (8, 9) est déterminée.

2. Procédé selon la revendication 1, la fraction statique étant déterminée sous la forme d'un vecteur (12) selon lequel des points d'image (13) des deux images (8, 9) associés à la région de référence (11) sont déplacés entre les images (8, 9) .

3. Procédé selon la revendication 2, tous les points d'image (13) d'une des images (8, 9) étant déplacés selon le vecteur (12), de façon que des points d'image (13) des deux images (8, 9) associés à la région de référence (11) coïncident au moins essentiellement, de préférence complètement.

4. Procédé selon une des revendications 1 à 3, des modifications, survenues dans le laps de temps situé entre les prises des images (8, 9), d'éléments individuels identifiés sur les images (8, 9), en particulier de fragments du produit récolté (2) et/ou d'organes de travail (5) de la machine de récolte (1), étant déterminées, la fraction statique de la modification générale n'étant pas prise en compte.

5. Procédé selon une des revendications 1 à 4, des paramètres d'état du produit récolté et/ou d'organes de travail (5) de la machine de récolte (1) étant déterminés au moyen de l'unité d'analyse (10).

6. Procédé selon la revendication 5, au moins un état de vitesse relatif à une vitesse de flux du produit récolté coupé étant déterminé dans la zone du tablier de coupe (3) et/ou du convoyeur incliné (4).

7. Procédé selon la revendication 5 ou 6, au moins un paramètre d'exploitation au moins d'un organe de travail (5) de la machine de récolte (1) étant modifié automatiquement en fonction des paramètres d'état déterminés.

8. Procédé selon une des revendications 1 à 7, au moins une zone du convoyeur incliné (4) et/ou au moins une partie d'une échelle d'accès (14) et/ou au moins une partie d'un cadre porteur (15) de la machine de récolte (1) étant définie comme région de référence (11).

9. Procédé selon une des revendications 1 à 8, au moins une zone antérieure (16) du tablier de coupe (3) située à l'opposé de la machine de récolte (1), se trouvant dans le sens de la marche de la machine de récolte (1) devant le tablier de coupe (3), et/ou une zone postérieure (17) du tablier de coupe (3) située derrière le tablier de coupe (3) par rapport au sens de marche de la machine de récolte (1) étant détectée au moyen de la caméra (6).

10. Procédé selon la revendication 9, la zone de couverture (7) incluant la zone antérieure (16), la zone postérieure (17), une partie du tablier de coupe (3) ainsi qu'une partie du convoyeur incliné (4).

11. Procédé selon une des revendications 1 à 10, une pluralité d'images (8, 9) étant prises simultanément, de préférence au moyen d'un nombre de caméras (6) correspondant au nombre d'images (8, 9).

12. Procédé selon la revendication 11, des zones de couverture (7) d'une pluralité de caméras (6) se chevauchant entre elles au moins en partie, de préférence dans une zone centrale du tablier de coupe (3).

13. Procédé selon une des revendications 1 à 12, les images (8, 9) étant prises à une fréquence d'au moins 10 Hz, de préférence d'au moins 20 Hz, plus préférentiellement d'au moins 30 Hz.

14. Procédé selon une des revendications 1 à 13, la zone de couverture (7) étant détectée à travers une vitre avant (18) de la machine de récolte (1), la caméra (6) étant disposée dans un espace intérieur (19) d'une cabine de conduite (20) de la machine de récolte (1).
